# DEMANDE DE BREVET EUROPEEN

(11) **EP 2 023 125 A1**
(43) Date de publication de la demande: **11.02.2009**
(21) Numéro de dépôt: 08160725.1
(22) Date de dépôt: 18.07.2008
(51) Int. Cl.: G01N 21/53, B60Q 1/00

(54) **Procédé de détection d'une gerbe d'eau à l'arrière d'un véhicule**

(30) Priorité: 03.08.2007 FR 0705713
(71) Demandeur: VALEO VISION, 93012 Bobigny (FR)
(72) Inventeur: Robert, Caroline, 75011, PARIS (FR); Leleve, Joël, 93800, EPINAY SUR SEINE (FR); Hue, David, 78400, CHATOU (FR)

(57) **Abrégé**

L'invention concerne un procédé de détection d'un phénomène perturbateur de visibilité (G1) généré par un véhicule automobile (V), comportant les étapes :
- d'émettre un premier faisceau lumineux (FX1), le faisceau lumineux pouvant être réfléchi par un obstacle (O) ;
- d'émettre un deuxième faisceau lumineux de référence (FX2) à l'aide d'une deuxième source émettrice (SCR2) ;
- de recevoir sur un récepteur (RCV) le faisceau lumineux réfléchi (FX1_R) résultant de la réflexion du premier faisceau lumineux (FX1) sur un obstacle (O), et le deuxième faisceau lumineux (FX2) directement envoyé sur l'entrée du récepteur (RCV) ;
- de générer au moins un signal de détection (SD) en fonction d'une combinaison du faisceau lumineux réfléchi (FX1_R) en cas d'obstacle (O) et d'un faisceau de référence (FX2) ; et
- de comparer la modulation d'au moins un signal de détection généré (SD) avec une information de référence (IR).

Selon l'invention, les premier (FX1) et deuxième (FX2) faisceaux lumineux sont des faisceaux infrarouge, et ils sont dirigés vers l'arrière du véhicule (V).

## Description

### Domaine de l'invention

La présente invention concerne un procédé de détection d'un phénomène perturbateur de visibilité généré par un véhicule automobile, et un dispositif de détection permettant de mettre en oeuvre ledit procédé.

Elle trouve une application particulière dans le domaine des véhicules automobiles.

### Etat de la technique

Dans le cas d'une application à un véhicule automobile, des procédés de détection d'un obstacle solide tel qu'un véhicule suiveur se trouvant derrière le véhicule sont connus de l'état de la technique et permettent par exemple de prévenir si le véhicule suiveur se rapproche trop. Ils utilisent pour cela différents capteurs tels qu'un Radar, un LIDAR, une caméra de vision arrière. S'il existe un tel obstacle et que les feux arrières sont allumés, en cas de route mouillée (qu'il pleuve ou non), la visibilité des feux peut se trouver altérée, par un phénomène perturbateur de visibilité tel qu'une gerbe d'eau générée par les roues arrières du véhicule, pour le conducteur du véhicule suiveur, ce qui peut engendrer une certaine insécurité pour ledit conducteur suiveur et pour le dit conducteur suivi. De tels procédés ne permettent pas de détecter de tel phénomène perturbateur de visibilité.

### Objet de l'invention

La présente invention a pour but de permettre la détection d'un phénomène perturbateur de visibilité généré par un véhicule automobile.

Selon un premier objet de l'invention, ce but est atteint par un procédé de détection d'un phénomène perturbateur de visibilité généré par un véhicule automobile, comportant les étapes :
- d'émettre un premier faisceau lumineux, le faisceau lumineux pouvant être réfléchi par un obstacle ;
- d'émettre un deuxième faisceau lumineux de référence à l'aide d'une deuxième source émettrice ;
- de recevoir sur un récepteur le faisceau lumineux réfléchi résultant de la réflexion du premier faisceau lumineux sur un obstacle, et le deuxième faisceau lumineux directement envoyé sur l'entrée du récepteur ;
- de générer au moins un signal de détection en fonction d'une combinaison du faisceau lumineux réfléchi en cas d'obstacle et d'un faisceau de référence, et
- de comparer la modulation d'au moins un signal de détection généré avec une information de référence.
Selon l'invention, les premier et deuxième faisceaux lumineux sont des faisceaux infrarouges, et en ce qu'ils sont dirigés vers l'arrière du véhicule.

Comme on va le voir en détail par la suite, un tel procédé présente l'avantage de se baser sur un signal de détection qui présente une modulation caractérisante d'un phénomène perturbateur de visibilité tel qu'une gerbe d'eau et donc de déterminer la présence d'un tel phénomène.

Selon des modes de réalisation non limitatifs, le procédé présente en outre les caractéristiques suivantes.
- La combinaison est composée d'une sommation des deux faisceaux, d'un décalage de phase et d'un décalage d'amplitude de ces deux faisceaux. Cela permet d'obtenir de façon simple deux signaux de détection.
- Un signal de détection correspond à un décalage de phase entre le faisceau lumineux réfléchi et le faisceau de référence. Ce signal de détection permet notamment de déterminer une distance entre un obstacle et l'arrière du véhicule.
- L'information de référence est un seuil de modulation déterminé. Grâce à ce seuil de modulation, il est possible de faire la différence entre la présence d'une gerbe d'eau gênante pour la visibilité, et l'absence d'une gerbe d'eau avec une atmosphère sèche ou humide mais non gênante pour la visibilité.
- L'information de référence est un seuil de modulation en amplitude. Cette information est facile à comparer car la modulation en amplitude d'un signal de détection peut être directement lue sur le signal lui-même sans traitement préalable particulier.
- L'émission du faisceau lumineux est déclenchée à partir d'un seuil de vitesse déterminé du véhicule. En effet, en deçà de ce seuil, aucune gerbe d'eau n'est générée ou si elle est générée, elle n'est pas gênante à basse vitesse.
- Le phénomène perturbateur de visibilité est constitué d'une gerbe d'eau générée par les roues du véhicule.

Selon un deuxième objet de l'invention, elle concerne un dispositif de détection d'un phénomène perturbateur de visibilité généré par un véhicule automobile, comportant :
- une première source émettrice pour émettre un faisceau lumineux pour éclairer à l'arrière du véhicule, le faisceau lumineux pouvant être réfléchi par un obstacle ;
- une deuxième source lumineuse émettrice d'un faisceau lumineux de référence ;
- un récepteur pour recevoir :
   o le faisceau lumineux réfléchi résultant de la réflexion du faisceau lumineux sur un obstacle, et
   o le faisceau lumineux de référence directement envoyé sur son entrée, et
- une unité de contrôle pour :
   - générer au moins un signal de détection en fonction d'une combinaison du faisceau lumineux réfléchi en cas d'obstacle et d'un faisceau de référence, et
   - comparer la modulation d'au moins un signal de détection généré avec une information de référence.

Selon ce deuxième objet de l'invention, les premier et deuxième faisceaux lumineux sont des faisceaux infrarouges, et ils sont dirigés vers l'arrière du véhicule.

Dans un mode de réalisation non limitatif, le dispositif de détection est activé à partir d'un seuil de vitesse déterminé du véhicule. En effet, en deçà de ce seuil, aucune gerbe d'eau n'est générée ou si elle est générée, elle n'est pas gênante à basse vitesse. De plus, cela permet de consommer moins de courant.

Selon un troisième objet de l'invention, elle concerne un produit programme d'ordinateur comportant une ou plusieurs séquences d'instructions exécutables par une unité de traitement d'information, l'exécution desdites séquences d'instructions permettant une mise en oeuvre du procédé selon l'une quelconque des caractéristiques précédentes.

### Brève description des figures

D'autres caractéristiques et avantages de la présente invention seront mieux compris à l'aide de la description et des dessins non limitatifs parmi lesquels :
- la Fig. 1 représente un diagramme d'un mode de réalisation non limitatif du procédé de détection selon l'invention ;
- la Fig. 2 est une représentation schématique d'un véhicule générant un phénomène perturbateur de visibilité détecté par le procédé selon la Fig. 1 ;
- la Fig. 3 est un schéma montrant notamment l'émission d'un faisceau lumineux qui est réfléchi sur un obstacle selon le procédé de la Fig. 1
- la Fig. 4 est un relevé d'un signal de détection établi par le procédé selon la Fig. 1, le signal de détection étant représentatif de l'absence de phénomène perturbateur de visibilité et d'obstacle solide ;
- la Fig. 5 est un relevé d'un signal de détection établi par le procédé selon la Fig. 1, le signal de détection étant représentatif de l'absence de phénomène perturbateur de visibilité et de la présence d'un obstacle solide ;
- la Fig. 6 est un relevé d'un signal de détection établi par le procédé selon la Fig. 1, le signal de détection étant représentatif de la présence d'un phénomène perturbateur de visibilité et de l'absence d'un obstacle solide ;
- la Fig. 7 est un relevé d'un signal de détection établi par le procédé selon la Fig. 1, le signal de détection étant représentatif de la présence d'un phénomène perturbateur de visibilité et de la présence d'un obstacle solide, et
- la Fig. 8 est un schéma du dispositif de détection permettant la mise en oeuvre du procédé de la Fig. 1.

### Description détaillée de modes de réalisation non limitatifs de l'invention

Lorsque une route est mouillée, les turbulences générées à l'arrière d'un véhicule automobile tel qu'une voiture, un camion etc. (lorsque celui-ci roule) sont l'entremêlement de plusieurs gerbes d'eau (ce n'est pas un phénomène lisse). Cela peut entraîner une baisse de la visibilité des feux arrière pour un conducteur d'un véhicule suiveur. Il est alors intéressant d'augmenter l'intensité des feux arrière pour permettre une meilleure visibilité de ces feux et de ce fait de détecter la présence de ces gerbes d'eau à l'arrière du véhicule auparavant.

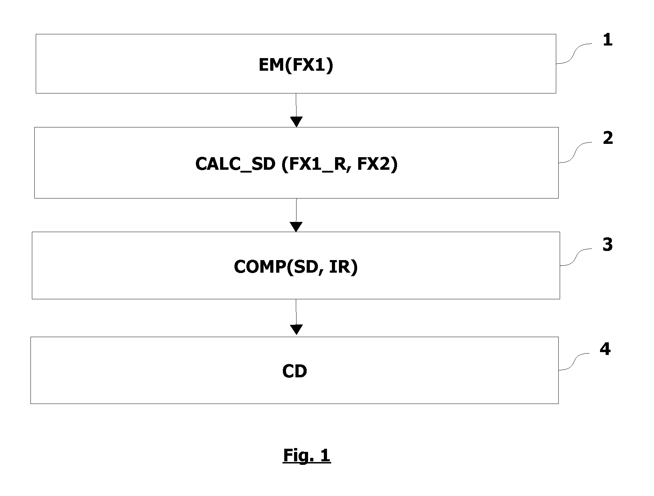

Le procédé selon l'invention permet de détecter un phénomène perturbateur de visibilité des feux arrière d'un véhicule tel qu'une gerbe d'eau. Il est décrit dans un mode de réalisation non limitatif à la Fig. 1.

Le procédé de détection comporte les étapes suivantes telles qu'illustrées à la Fig 1:
- Emettre un faisceau lumineux FX1 pour éclairer à l'arrière du véhicule (étape EM(FX1) illustrée à la Fig. 1), le faisceau lumineux pouvant être réfléchi par un obstacle O ;
- Générer au moins un signal de détection SD en fonction d'une combinaison du faisceau lumineux réfléchi FX1_R en cas d'obstacle O et d'un faisceau de référence FX2 (étape CALC_SD(FX1_R, FX2) illustrée à la Fig. 1) ; et
- Comparer la modulation d'au moins un signal de détection généré SD avec une information de référence IR (étape COMP(SD, IR) illustrée à la Fig. 1).

Les étapes sont décrites en détail ci-après.

**Dans une première étape 1),** on émet un faisceau lumineux FX1 pour éclairer à l'arrière du véhicule V1, le faisceau lumineux pouvant être réfléchi par un obstacle O se trouvant à l'arrière du véhicule V1.

Un obstacle O (se trouvant derrière le véhicule V1) peut être :
- un obstacle dit «solide» tel qu'un véhicule suiveur V2; ou
- un obstacle dit «non solide» ou «mou» tel qu'une gerbe d'eau G1 générée par les roues du véhicule V1 ; ou
- une combinaison d'un obstacle «solide» et d'un obstacle «mou», par exemple un véhicule suiveur V2 et une gerbe d'eau G1 générée en raison d'une route mouillée, .

On notera qu'une gerbe d'eau est composée d'une pluralité de paquets d'eau.

Dans un mode de réalisation non limitatif, le faisceau lumineux émis FX1, est un faisceau infrarouge proche de longueur d'onde 850 nm. Cela évite de créer des effets lumineux intempestifs sur l'arrière du véhicule en présence d'un phénomène perturbateur G1, et de gêner ainsi les conducteurs suiveurs.

Par ailleurs, dans un mode de réalisation non limitatif, le faisceau FX1 est étroit. Dans un exemple non limitatif, il comporte une ouverture de 4°. Cela permet de ne pas avoir de perte de puissance. On a ainsi une concentration de l'énergie dans le faisceau lumineux FX1 et une détection d'un phénomène perturbateur à des distances plus grandes.

La génération du faisceau lumineux FX1 est effectuée par une source lumineuse SRC1 intégrée dans un capteur CAPT. La source et le capteur sont décrits plus loin.

Dans un premier mode de réalisation non limitatif, la génération du faisceau lumineux FX1 se fait dès le déclenchement des feux arrières. Il fonctionne ainsi en permanence dès l'allumage de ces feux. Cela permet d'être sûr de pouvoir détecter un phénomène perturbateur tel qu'une gerbe d'eau dès qu'il pleut ou que la route est mouillée et d'augmenter l'éclairage des feux arrières en conséquence.

Dans un deuxième mode de réalisation, la génération du faisceau lumineux FX1 se fait à partir d'un seuil de vitesse déterminé SV du véhicule V. Dans un exemple non limitatif, ce seuil SV est fixé à 50 km/h. En effet, une gerbe d'eau n'étant générée qu'à une certaine vitesse, cela permet de ne faire fonctionner le faisceau lumineux que lorsqu'il existe une gerbe d'eau ou lorsque la présence d'une telle gerbe d'eau devient gênante (à basse vitesse, elle n'est pas gênante pour un conducteur suiveur). Ainsi, ce deuxième mode est plus économique et sécuritaire que le premier mode car elle évite les éclairements intempestifs dans l'oeil du conducteur du véhicule suiveur V2.

Bien entendu, on peut combiner le premier et second modes de réalisation.

Le faisceau FX1 ainsi émis est réfléchi par tout obstacle solide (véhicule, mur, piéton, etc...) et/ou « mou » (eau, brouillard etc...) à l'arrière du véhicule V1 et le faisceau réfléchi FX1_R résultant revient en direction de la source émettrice SRC1 et est perçu par un récepteur RCV. Ce faisceau réfléchi FX1_R est déformé par l'obstacle et déphasé par rapport au faisceau émis FX1.

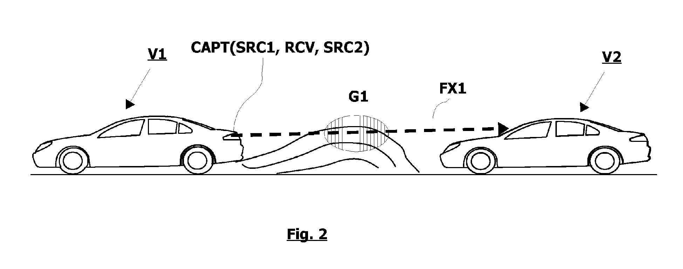

La Fig. 2 montre un exemple de faisceau lumineux FX1 généré par une première source lumineuse SRC1 à partir d'un véhicule V1 qui est réfléchi par un obstacle « mou », ici une gerbe d'eau G1 générée par les roues arrières du véhicule V1 et par un obstacle « solide », ici un véhicule suiveur V2. La réflexion sur l'eau du faisceau FX1 est également appelée rétro-diffusion.

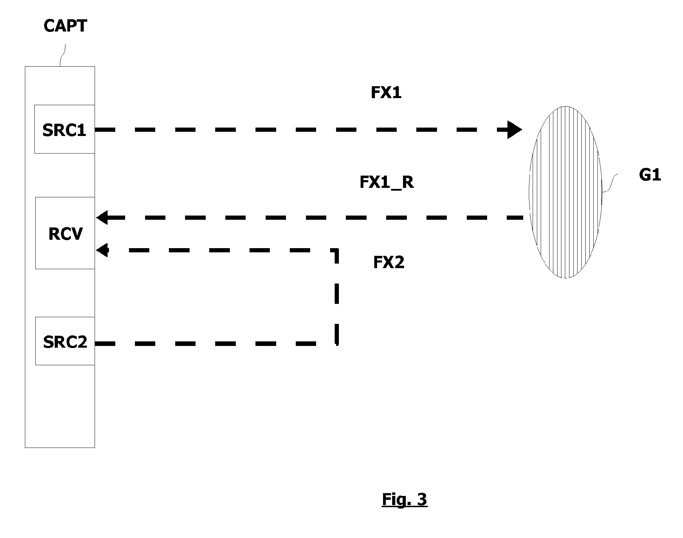

La Fig. 3 montre un faisceau FX1 émis à partir d'une source SRC1, le faisceau réfléchi résultant FX1_R est reçu par le récepteur RCV. La Fig. 3 montre également un faisceau de référence FX2 dont l'utilité est détaillée ci-après.

**Dans une deuxième étape 2)**, on génère au moins un signal de détection SD en fonction d'une combinaison du faisceau lumineux réfléchi FX1_R en cas d'obstacle O et d'un faisceau de référence FX2.

L'observation d'un phénomène perturbateur de visibilité tel qu'une gerbe d'eau G1 révèle une forte hétérogénéité des paquets d'eau qui la composent, liée aux turbulences aérodynamiques et hydrodynamiques. Cette hétérogénéité est instable dans le temps et avec une variabilité fonction complexe de la vitesse du véhicule et à l'environnement (épaisseur de la lame d'eau sur la route, nature du revêtement...). La vitesse d'évolution des paquets d'eau est lente comparée au temps de réaction d'un capteur CAPT. Il est donc possible avec le capteur CAPT (décrit plus loin) d'observer une variation de signaux représentative des évolutions des paquets d'eau. Ces signaux sont les signaux de détection SD.

La génération du signal de détection SD est effectuée de la manière suivante.

Un deuxième faisceau lumineux FX2 est émis par une deuxième source émettrice SCR2 dite compensatrice et envoyée directement en entrée du récepteur RCV sans être réfléchi par un passage d'obstacle. Le deuxième faisceau FX2 est du même type que le premier faisceau FX1 , à savoir à infrarouge.

Le faisceau réfléchi FX1_R et le faisceau de référence FX2 sont combinés. Dans un mode de réalisation non limitatif, la combinaison repose sur une sommation de ces deux signaux et un décalage en phase et un décalage en amplitude de ces deux signaux de manière à obtenir un signal nul. Les signaux de détection SD sont représentatifs du décalage de phase et du décalage d'amplitude. On obtient ainsi un signal de détection de distance SD et un signal de détection de réflectivité SD.

Comme on va le voir ci-après, ces signaux de détection SD permettent notamment de :
- a) mesurer une distance D à laquelle se trouve un obstacle «solide» derrière le véhicule V1 et de mesurer sa réflectivité ;
- b) déterminer la présence d'un obstacle «mou» tel que des paquets d'eau (issus d'une route mouillée avec ou sans présence de pluie), et donc détecter la présence d'au moins une gerbe d'eau ; et
- c) déterminer la présence d'un obstacle «mou» avec la présence d'un obstacle «solide» tel qu'un véhicule suiveur V2.

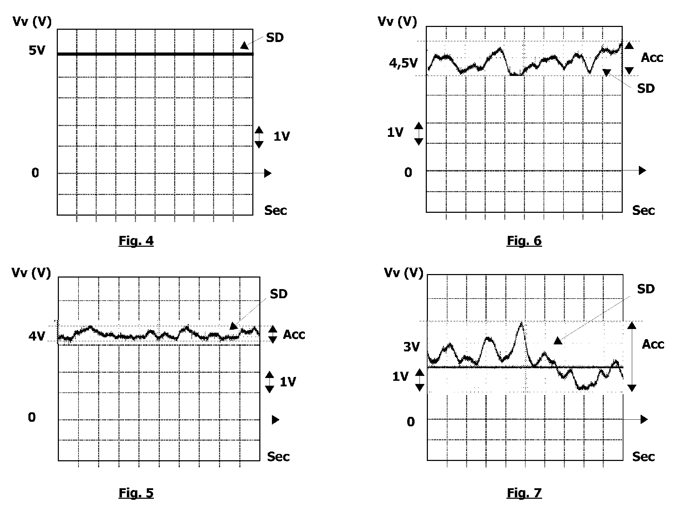

Des exemples non limitatifs de signaux de détection SD sont représentés aux Fig. 4 à 7 sur lesquelles l'abscisse représente les secondes, et l'ordonnée des Volts correspondant à la sortie du capteur CAPT.

La Fig. 4 montre un signal de détection de distance SD (correspondant au décalage de phase cité ci-dessus) à 5V (valeur par défaut du capteur CAPT) car il n'existe ni phénomène perturbateur G1 ni obstacle «solide».

Dans le premier cas (a), si l'obstacle «solide» est un véhicule suiveur V2 par exemple, le faisceau réfléchi FX1_R a été réfléchi sur ledit véhicule suiveur V2. Il a mis un certain temps pour être réfléchi.

Ce temps se retrouve dans le décalage de phase (appelé également temps de vol) observé entre le faisceau réfléchi FX1_R et le faisceau de référence FX2 qui n'a pas été réfléchi. Ce temps permet de définir la distance D à laquelle se trouve le véhicule suiveur V2. Le signal de détection SD est une droite continue.

Dans le deuxième cas (b), si l'obstacle est un obstacle «mou» tel que des paquets d'eau G1, le faisceau réfléchi FX1_R a été réfléchi sur lesdits paquets d'eau G1. Il a mis également un certain temps pour être réfléchi. Ce temps se retrouve dans le décalage de phase observé entre le faisceau réfléchi FX1_R et le faisceau de référence FX2 qui n'a pas été réfléchi. Ce temps permet de définir la distance à laquelle se trouve le premier paquet d'eau (début de la gerbe d'eau) et donc de déterminer le début de la première gerbe d'eau, celle la plus proche du véhicule V1. La composante du signal continue SD permet d'observer cette distance.

De plus, étant donné que le faisceau est réfléchi FX1_R sur les différents paquets d'eau et du fait que ces paquets d'eau évoluent au cours du temps (se déplacent), on peut observer sur le signal de détection SD sur l'intervalle de temps déterminé T, une modulation de ce signal de détection. La composante alternative du signal de détection SD permet donc de voir cette modulation et de déterminer la présence d'une gerbe d'eau G1, comme on peut le voir sur les Fig. 6 et 7.

Dans le troisième cas (c), dans le cas où l'obstacle est composé d'un obstacle solide et d'un obstacle «mou», le faisceau réfléchi FX1_R a été réfléchi à la fois sur les paquets d'eau G1 et sur l'obstacle solide. Le signal de détection distant SD résultant est une combinaison de l'information distance obstacle «solide» et distance obstacle «mou» et ne peut donc être considérée ni comme une mesure fiable de la distance de l'obstacle «solide» ni comme une mesure fiable de la distance de l'obstacle «mou».

On notera que le fait de déterminer la distance D à laquelle se trouve un obstacle O par rapport à un temps issu d'un décalage de phase entre deux signaux et d'obtenir une distance correspondante est bien connu de l'homme du métier et n'est donc pas décrit en détail ci-après.

**Dans une troisième étape 3),** on compare la modulation d'au moins un signal de détection généré SD avec une information de référence IR.

Dans un mode de réalisation non limitatif, l'information de référence IR est un seuil de modulation.

Dans une variante de réalisation non limitative, ce seuil de modulation est un seuil de modulation en amplitude. Ainsi, une comparaison entre la modulation en amplitude du signal de détection (correspondant à une valeur crête à crête de l'amplitude des oscillations du signal) et ce seuil de modulation en amplitude est facile à traiter car la modulation en amplitude d'un signal de détection SD peut être directement lue sur le signal lui-même sans traitement préalable particulier. Dans un exemple non limitatif, ce seuil de tension SU est fixé à 50mV. Au-delà de ce seuil de modulation SU, on en déduit la présence d'un phénomène perturbateur G1 à l'arrière du véhicule V1. Ce seuil de modulation permet de faire la différence entre la présence d'une gerbe d'eau gênante pour la visibilité, et l'absence d'une gerbe d'eau avec une atmosphère sèche ou humide mais non gênante pour la visibilité.

Les cas suivants sont illustrés sur les Fig. 4 à 7. On prend comme exemple non limitatif, un signal de détection de distance SD (correspondant au décalage de phase) et une information de référence IR correspondant à un seuil de modulation en amplitude.

### • Absence de phénomène perturbateur G1

Si le signal de détection SD est continu (ou avec des modulations inférieures au seuil SU), on peut conclure en l'absence de gerbe d'eau comme sur les Fig. 4 et 5 et donc de phénomène perturbateur de visibilité.

### • Sans obstacle solide

De plus, si l'amplitude Vv du signal de détection SD est égale à une tension initiale Vi (ici 5 V), on peut conclure qu'il n'existe pas d'obstacle solide O comme illustré à la Fig. 4.

### • Avec obstacle solide

Par contre, si son amplitude Vv est inférieure à la tension initiale Vi (ici 5V), on peut en déduire qu'il existe un obstacle solide O et qu'il est à une certaine distance D selon la tension observée, comme illustré à la Fig. 5. Comme on peut le voir dans cette Fig. 5, l'amplitude moyenne observée est de 4V en moyenne. Dans un exemple non limitatif, 1V correspond à 1 mètre. On a donc un obstacle solide O tel qu'un véhicule suiveur V2 à 4 mètres derrière le véhicule V1.

Dans l'exemple illustré, on peut également observer une légère modulation du signal SD. Cette modulation est inférieure au seuil de modulation déterminé SU de 50mV (dans l'exemple non limitatif pris). On est donc en présence d'une atmosphère humide mais sans présence de phénomène perturbateur de visibilité G1. On notera que dans le cas d'une atmosphère sèche, le signal de détection SD ne présenterait aucune modulation, mais serait une droite continue.

### • Présence d'un phénomène perturbateur

Si le signal de détection SD est modulé et la valeur crête à crête Acc de sa modulation supérieure au seuil de modulation déterminé SU, on peut conclure en la présence de gerbes d'eau (sans ou avec un obstacle solide comme sur les Fig. 6 et 7 respectivement) et donc d'un phénomène perturbateur de visibilité G1.

Comme décrit ci-dessus, la composante continue de ce signal représente la distance du premier paquet d'eau derrière le véhicule V1. La composante alternative représente la modulation en amplitude du signal de détection SD.

Bien entendu, ce qui est expliqué ci-dessus concernant la comparaison avec une information de référence IR peut être également appliqué à un signal de détection de réflectivité SD (correspondant à un décalage d'amplitude).

Dans un autre mode de réalisation, on peut également combiner une comparaison d'une information de référence IR avec un signal de détection de distance SD, et une comparaison d'une information de référence IR un signal de détection de réflectivité SD.

Ainsi, grâce à l'observation de la modulation d'au moins un signal de détection SD, on peut détecter la présence d'un phénomène perturbateur G1 de visibilité tel qu'une gerbe d'eau à l'arrière du véhicule V1. Plus les modulations sont importantes, plus il existe de turbulences à l'arrière du véhicule V1 et donc plus le phénomène perturbateur G1 est important.

On allume et/ou augmente l'intensité des feux arrières du véhicule V1 en conséquence (ou on les allume) afin qu'un véhicule suiveur V2 puisse voir correctement les feux arrières du véhicule V1.

**Dans une quatrième étape 4),** après qu'un phénomène perturbateur G1 est détecté, un traitement adéquate CD en temps réel sur le véhicule V peut être exécuté.

Dans des exemples non limitatifs, il peut s'agir :
- d'augmenter automatiquement l'intensité des feux arrières du véhicule V en fonction des indications sur la présence d'un phénomène perturbateur G1. En complément on prendra en compte la présence d'obstacle (on augmente l'intensité des feux sans éblouir le conducteur du véhicule suiveur V2) ; ou
- d'envoyer un signal d'alerte au conducteur du véhicule V1 de manière à ce qu'il allume et/ou augmente lui-même l'intensité ces feux arrières par exemple s'il peut le faire pour éclairer plus ; ou
- d'allumer les feux arrières puis de régler leur intensité si nécessaire.

On notera que cette quatrième étape se fait au fur et à mesure de la détection de la présence d'un phénomène perturbateur G1 par le procédé décrit ci-dessus.

Ainsi, le traitement adéquat CD tel que par exemple l'adaptation automatique de l'éclairage des feux arrières est exécuté en temps réel puisqu'il est effectué après chaque détection d'un phénomène perturbateur.

Ainsi, grâce au procédé décrit ci-dessus, on peut détecter :
- la présence d'un phénomène perturbateur G1 ; et
- la présence d'un obstacle solide.

L'information de présence d'un obstacle tel qu'un véhicule suiveur V2 peut-être utilisée pour une gestion optimale de l'intensité des fonctions de signalisation arrière. Ainsi, on peut régler l'intensité des feux arrière en fonction de la présence ou non d'un véhicule suiveur proche (pour ne pas être éblouissant). Cela permet ainsi d'avoir plus de sécurité pour le véhicule suiveur. On notera qu'à l'arrière du véhicule l'intensité des feux de positions par exemple est caractérisée en plusieurs points de norme. Par exemple, selon une norme européenne ECE R7, l'intensité de ces points varie de 0.05cd à 4cd minimum suivant les points. Le maximum permis est lui de 12cd pour un feu simple, de 17cd pour un ensemble de feux. Ainsi, si l'on détecte des paquets d'eau alors on augmente l'intensité des feux, mais si on détecte des paquets d'eau et la présence d'un véhicule suiveur proche on augmente l'intensité des feux en conséquence (c'est-à-dire moins qu'en l'absence de ce véhicule pour ne pas être éblouissant et moins qu'en présence d'un véhicule éloigné).

Le procédé de l'invention est mis en oeuvre par un dispositif DISP de détection représenté à la Fig. 9.

Ce dispositif DISP comporte notamment :
- une source lumineuse émettrice SRC1 d'un faisceau lumineux FX1 pour éclairer à l'arrière du véhicule V1, le faisceau lumineux pouvant être réfléchi par un obstacle O ; et
- une unité de contrôle UC pour :
   o générer au moins un signal de détection SD en fonction d'une combinaison du faisceau lumineux réfléchi FX1_R en cas d'obstacle et d'un faisceau de référence FX2 ;
   o comparer la modulation d'au moins un signal de détection SD généré avec une information de référence IR.

Le dispositif DISP comporte en outre :
- une deuxième source lumineuse émettrice SRC2 d'un faisceau lumineux de référence FX2 ;
- un récepteur RCV pour recevoir :
   o le faisceau lumineux réfléchi FX1_R résultant de la réflexion du faisceau lumineux FX1 sur un obstacle O, et
   o le faisceau lumineux de référence FX2 directement envoyé sur son entrée (sans réflexion sur un obstacle O).

L'ensemble première source lumineuse SRC1, deuxième source lumineuse SRC2 et récepteur RCV forme un capteur CAPT.

L'unité de contrôle UC permet en outre de :
- commander la première source lumineuse SRC1 ;
- commander la deuxième source lumineuse SRC2 ;
- commander le récepteur RCV ;
- commander (allumage/augmentation automatique de l'intensité des feux) ou d'effectuer (envoi d'un signal d'alerte) le traitement adéquate CD ; et
- effectuer la comparaison entre la modulation d'au moins un signal de détection SD et de l'information de référence IR.

Les éléments du dispositif DISP sont décrits en détail ci-après.

### • La première source lumineuse SRC1 (dite source émettrice).

La source lumineuse SRC1 est une diode de type LED. Dans d'autres modes non limitatifs, on peut avoir des diodes laser, OLED, lampe halogène avec concentrateur de lumière etc., toute source capable d'émettre un faisceau lumineux FX1 tel que décrit auparavant. On rappelle qu'une diode transforme le courant électrique en photons de lumière.

Cette source permet d'émettre le faisceau lumineux FX1 à savoir elle émet des pulses de lumière à une certaine fréquence.

De plus la source SRC1 est choisie pour émettre un faisceau FX1 d'une certaine portée. On prendra dans un exemple non limitatif une portée entre 5 et 20 mètres de manière à être sûr de détecter la présence d'une gerbe d'eau à l'arrière du véhicule suivie ou non d'un véhicule suiveur.

Dans un mode de réalisation non limitatif, elle permet d'émettre un faisceau à une fréquence comprise entre 200 et 500kHz. Cela permet d'avoir des sources lumineuses standard et à bas coût.

Dans un exemple non limitatif, la source SRC1 est placée dans un feu arrière du véhicule V, en raison de la protection procurée par la glace du feu, ou sur l'arrière d'un véhicule (région de l'éclairage de la plaque de police par exemple, haillon etc...), ces endroits permettant d'évaluer la présence d'un phénomène perturbateur G1 généré par une des roues arrières. En effet, de par sa taille (de l'ordre du cm³), la source lumineuse SRC1 infrarouge est facile à intégrer dans un feu arrière de véhicule. Par ailleurs, la partie arrière du feu présente souvent des volumes disponibles permettant d'accueillir une telle source.

### • Le récepteur RCV.

Dans un mode de réalisation non limitatif, le récepteur est une photodiode. Le récepteur dépend de la longueur d'onde du faisceau lumineux FX utilisée.

Dans un autre exemple non limitatif, le récepteur peut être un récepteur InGaAS si on émet un faisceau lumineux FX de longueur d'onde InGaAS. Cela permet d'émettre dans une bande de fréquences moins nocive pour l'oeil humain que les infrarouges, et d'augmenter la puissance optique de sorte à effectuer une détection plus lointaine.

L'intérêt d'utiliser une photodiode est d'obtenir un capteur CAPT bas coût. On rappelle qu'une photodiode transforme les photons de la lumière reçue en courant électrique.

Ce récepteur permet de :
- recevoir le faisceau lumineux réfléchi FX1_R, et
- recevoir le faisceau de référence FX2.

Le récepteur RCV est placé dans le chemin de retour du pulse de lumière envoyé (ou encore de la lumière émise). Il est donc placé de sorte à être éclairé par le faisceau réfléchi FX1_R.

Dans un mode de réalisation non limitatif, le récepteur RCV est placé près de la source émettrice SRC1 pour permettre d'avoir plus de signal retour perçu du faisceau lumineux FX1. De plus, cela permet d'avoir un meilleur gain en efficacité et une simplicité de gestion de l'électronique du récepteur.

On rappelle que le faisceau lumineux réfléchi FX1_R est composé de pulses qui ont été réfléchis par tout obstacle «solide» (véhicule, mur, piéton, trottoir etc....) et / ou non «solide» = «mou» (eau, brouillard etc.) et qui sont revenus ensuite en direction de l'émetteur SRC1 et du récepteur RCV, déformés par l'obstacle (absorption, forme de l'obstacle etc.) et déphasés.

### • La deuxième source lumineuse SRC2 (dite source compensatrice).

La source lumineuse SRC2 est une diode dite compensatrice de type LED. Dans d'autres modes non limitatifs, on peut avoir des diodes laser, OLED, lampe halogène avec concentrateur de lumière etc., toute source capable d'émettre un faisceau lumineux de référence FX2 tel que décrit auparavant.

Cette source permet d'émettre le faisceau lumineux de référence FX2 qui est du même type que le faisceau lumineux FX1 au départ (infrarouge, même fréquence).

La source lumineuse compensatrice SRC2 vient éclairer en permanence le récepteur RCV. Elle émet donc à l'allumage du capteur CAPT les mêmes pulses de lumière que la première source lumineuse SRC1 mais les envoie directement (donc sans passage d'obstacle) vers le récepteur.

Dans un mode de réalisation non limitatif, elle est placée non loin du récepteur RCV pour simplifier le chemin optique à parcourir.

### • Le capteur CAPT

Ainsi, ces trois composants SRC1, SRC2 et RCV forment un capteur CAPT. Ce capteur CAPT prend peu de place (inférieur à la taille d'un paquet de cigarettes) lorsque ces trois composants sont placés l'un à côté de l'autre.

On notera qu'on peut également avoir un unique composant pour faire la fonction d'émetteur et récepteur. On fera par exemple fonctionner une diode (donc émettrice) en photodiode (donc réceptrice) et on alternera le fonctionnement mais cette solution est plus compliquée à gérer et augmente le coût du capteur CAPT.

Par ailleurs, comme décrit précédemment, on choisit le capteur CAPT de sorte que son temps de réaction (appelé encore résolution temporelle) soit inférieur à la vitesse d'évolution des paquets d'eau de manière à pouvoir observer une variation de signal représentative des évolutions des paquets d'eau et donc la modulation d'un signal de détection SD.

On notera que la vitesse d'évolution des paquets d'eau est la durée caractéristique de déplacement de ces paquets à l'arrière du véhicule (les paquets d'eau montent et descendent avec une certaine vitesse). Le capteur CAPT est capable de discriminer deux pulses de lumière.

### • L'unité de contrôle UC.

Elle permet de commander l'émission de la source compensatrice SRC2 de manière à faire varier le faisceau de référence FX2 (notamment par un décalage de phase et un décalage d'amplitude) par rapport au faisceau lumineux réfléchi FX1_R jusqu'à obtenir, en le sommant avec le faisceau lumineux réfléchi FX1_R un signal nul. Cette unité UC permet de mesurer le décalage de phase et le décalage d'amplitude et ainsi d'obtenir les signaux de détection SD décrit précédemment (de distance et de réflectivité).

Une telle unité UC permettant d'effectuer un décalage de signaux est connue de l'homme du métier et est simple à mettre en oeuvre car elle permet l'ajustement de deux signaux (compensatrice et émettrice) de manière à annuler les deux faisceaux FX1_R et FX2 en effectuant uniquement un décalage de signaux comme décrit ci-dessus.

Aucune mesure des temps très courts inférieurs à 100ns (équivalent environ au temps de vol d'un pulse de lumière) par évaluation du temps de vol d'un pulse de lumière entre son émetteur et son récepteur n'est nécessaire. En conséquence, aucune électronique de haute qualité (équivalente à du matériel militaire) difficilement compatible avec les coûts autorisés en automobile n'est nécessaire.

On notera que, dans un mode de réalisation non limitatif, le capteur CAPT, et donc le dispositif de détection DISP, est activé à partir d'un seuil de vitesse déterminé du véhicule SV décrit précédemment. En effet, en deçà de ce seuil, aucune gerbe d'eau n'est générée ou si elle est générée, elle n'est pas gênante à basse vitesse. De plus, cela permet de consommer moins de courant et donc moins d'énergie.

On notera que la mise en oeuvre du procédé de détection exposé ci-dessus peut être effectuée au moyen d'un dispositif micro programmé « software », d'une logique câblée, ou encore de composants électroniques « hardware ».

Ainsi, le dispositif de détection DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH par exemple. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

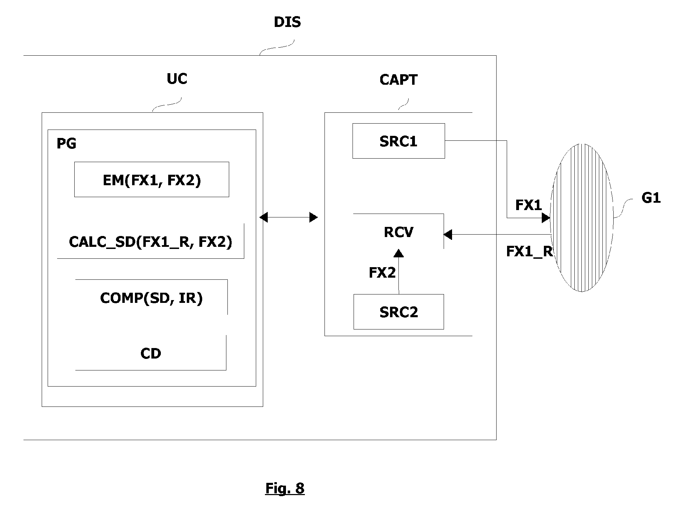

Dans l'exemple non limitatif de la Fig. 8, le programme d'ordinateur PG est inscrit dans une mémoire de l'unité de contrôle UC.

Bien entendu, la description du procédé n'est pas limitée aux modes de réalisation et exemples décrits. Ainsi, dans un mode de réalisation non limitatif, on peut également effectuer dans la troisième étape 3), une comparaison de la modulation d'au moins un signal de détection SD avec une information de référence IR qui est un seuil de modulation en fréquence. On prend ainsi e compte la modulation en fréquence d'un signal de détection SD.

Dans un autre mode de réalisation, on peut également imaginer une combinaison d'une telle comparaison (avec un seuil de modulation en fréquence) avec une comparaison avec un seuil de modulation en amplitude tel que décrit précédemment.

Ainsi, l'invention présente notamment les avantages suivants :
- Elle permet de détecter au moins une gerbe d'eau et d'allumer et/ou d'augmenter l'intensité des feux arrière en conséquence ;
- Elle permet d'obtenir un capteur bas coût (notamment par l'utilisation de la photodiode et du fait du procédé de détection simple) ;
- C'est une solution simple à mettre en oeuvre du fait de la combinaison (sommation et décalage de phase et d'amplitude) simple à effectuer ;
- Le décalage de phase et le décalage d'amplitude étant simple à mettre en oeuvre, il permet d'utiliser un capteur à des fréquences standard (200-500kHz) ;
- Elle permet de déterminer si un obstacle O se situant à l'arrière du véhicule V1 est un phénomène perturbateur de visibilité généré par le véhicule V1 ;
- Elle permet la détection d'une atmosphère humide non gênante pour la visibilité grâce au seuil de tension SU ;
- Elle permet de ne pas prendre en compte des contraintes métrologiques (mesure des temps très courts du temps de vol d'un pulse lumineux). Ainsi, aucune électronique ou unité de contrôle complexe n'est nécessaire. Seuls des composants standards peuvent être utilisés ;
- Elle permet d'utiliser un dispositif qui prend peu de place du fait de sa simplicité de mise en oeuvre ;
- Elle permet de déterminer si l'obstacle à l'arrière d'un véhicule est un phénomène perturbateur de visibilité ;
- Il n'est pas nécessaire d'analyser la déformation de la forme d'un pulse lumineux pour évaluer la conjugaison de la rétrodiffusion sur un obstacle «mou» et la réflexion sur un obstacle «solide». Ainsi, on évite d'utiliser des composants coûteux en optique et en électronique notamment.

## Revendications

1. Procédé de détection d'un phénomène perturbateur de visibilité (G1) généré par un véhicule automobile (V), comportant les étapes :
- d'émettre un premier faisceau lumineux (FX1), le faisceau lumineux pouvant être réfléchi par un obstacle (O) ;
- d'émettre un deuxième faisceau lumineux de référence (FX2) à l'aide d'une deuxième source émettrice (SCR2) ;
- de recevoir sur un récepteur (RCV) le faisceau lumineux réfléchi (FX1_R) résultant de la réflexion du premier faisceau lumineux (FX1) sur un obstacle (O), et le deuxième faisceau lumineux (FX2) directement envoyé sur l'entrée du récepteur (RCV) ;
- de générer au moins un signal de détection (SD) en fonction d'une combinaison du faisceau lumineux réfléchi (FX1_R) en cas d'obstacle (O) et d'un faisceau de référence (FX2) ; et
- de comparer la modulation d'au moins un signal de détection généré (SD) avec une information de référence (IR),
**caractérisé en ce que** les premier (FX1) et deuxième (FX2) faisceaux lumineux sont des faisceaux infrarouge, et **en ce qu'**ils sont dirigés vers l'arrière du véhicule (V).

2. Procédé de détection selon la revendication 1, **caractérisé en ce que** la combinaison est composée d'une sommation des deux faisceaux (FX1_R, FX2), d'un décalage de phase et d'un décalage d'amplitude de ces deux faisceaux (FX1_R, FX2).

3. Procédé de détection selon la revendication 1 ou 2, **caractérisé en ce qu'**un signal de détection (SD) correspond à un décalage de phase entre le faisceau lumineux réfléchi (FX1_R) et le faisceau de référence (FX2).

4. Procédé de détection selon l'une des revendications précédentes, **caractérisé en ce que** l'information de référence (IR) est un seuil de modulation déterminé (SU).

5. Procédé de détection selon l'une des revendications précédentes, **caractérisé en ce que** l'information de référence (IR) est un seuil de modulation en amplitude.

6. Procédé de détection selon l'une des revendications précédentes, **caractérisé en ce que** l'émission du faisceau lumineux (FX1) est déclenchée à partir d'un seuil de vitesse déterminé (SV) du véhicule (V).

7. Procédé de détection selon l'une des revendications précédentes, **caractérisé en ce que** le phénomène perturbateur de visibilité (G1) est constitué d'une gerbe d'eau (G1) générée par les roues du véhicule (V).

8. Dispositif de détection (DISP) d'un phénomène perturbateur (G1) de visibilité généré par un véhicule automobile (V), comportant :
- une première source émettrice (SRC1) pour émettre un faisceau lumineux (FX1) pour éclairer à l'arrière du véhicule, le faisceau lumineux pouvant être réfléchi par un obstacle (O) ;
- une deuxième source lumineuse émettrice (SRC2) d'un faisceau lumineux de référence (FX2) ;
- un récepteur (RCV) pour recevoir :
o le faisceau lumineux réfléchi (FX1_R) résultant de la réflexion du faisceau lumineux (FX1) sur un obstacle (O), et
o le faisceau lumineux de référence (FX2) directement envoyé sur son entrée, et
- une unité de contrôle (UC) pour :
- générer au moins un signal de détection (SD) en fonction d'une combinaison du faisceau lumineux réfléchi (FX1_R) en cas d'obstacle (O) et d'un faisceau de référence (FX2) ; et
- comparer la modulation d'au moins un signal de détection généré (SD) avec une information de référence (IR),
**caractérisé en ce que** les premier (FX1) et deuxième (FX2) faisceaux lumineux sont des faisceaux infrarouge, et **en ce qu'**ils sont dirigés vers l'arrière du véhicule (V).

9. Dispositif de détection (DISP) selon la revendication précédente, **caractérisé en ce qu'**il est activé à partir d'un seuil de vitesse déterminé (SV) du véhicule (V).

10. Produit programme (PG) d'ordinateur comportant une ou plusieurs séquences d'instructions exécutables par une unité de traitement d'information, l'exécution desdites séquences d'instructions permettant une mise en oeuvre du procédé selon l'une quelconque des revendications précédentes 1 à 7.
